# EUROPÄISCHE PATENTSCHRIFT

(11) **EP 3 186 710 B1**
(45) Veröffentlichungstag und Bekanntmachung des Hinweises auf die Patenterteilung: **30.01.2019**
(21) Anmeldenummer: 15763839.6
(22) Anmeldetag: 24.08.2015
(51) Int. Cl.: G06F 11/16

(54) **MIKROCONTROLLERSYSTEM UND VERFAHREN FÜR SICHERHEITSKRITISCHE KRAFTFAHRZEUGSYSTEME SOWIE DEREN VERWENDUNG**
MICROCONTROLLER SYSTEM AND METHOD FOR SAFETY-CRITICAL MOTOR VEHICLE SYSTEMS AND THE USE THEREOF
SYSTÈME DE MICROCONTRÔLEUR ET PROCÉDÉ POUR DES SYSTÈMES DE VÉHICULE À MOTEUR CRITIQUES EN MATIÈRE DE SÉCURITÉ ET LEUR UTILISATION

(30) Priorität: 29.08.2014 DE 102014217321
(43) Veröffentlichungstag der Anmeldung: 05.07.2017
(73) Patentinhaber: Continental Teves AG & Co. OHG, 60488 Frankfurt am Main (DE)
(72) Erfinder: BAUMEISTER, Daniel, 63741 Aschaffenburg (DE); TRASKOV, Adrian, 61449 Steinbach (DE)
(86) Internationale Anmeldenummer: PCT/EP2015/069342
(87) Internationale Veröffentlichungsnummer: WO 2016/030324

(56) Entgegenhaltungen:
- US-A1- 2008 258 253
- US-A1- 2013 024 721

## Beschreibung

Die vorliegende Erfindung betrifft ein Mikrocontrollersystem für sicherheitskritische Kraftfahrzeugsysteme gemäß Oberbegriff von Anspruch 1, ein Verfahren zum Betreiben eines Mikrocontrollersystems für sicherheitskritische Kraftfahrzeugsysteme gemäß Oberbegriff von Anspruch 5 sowie deren Verwendung.

Hochverfügbare bzw. ausfallsichere Fahrzeugsysteme, wie sie für Anwendungen des automatisierten Fahrens benötigt werden, stellen erhöhte Anforderungen an die Verfügbarkeit und Wechselwirkungsfreiheit elektronischer Komponenten einzelner Kraftfahrzeugsysteme und hier speziell an einen jeweiligen Mikrocontroller, der die zugrundeliegende Software eines durch diesen betriebenen Fahrzeugsystems ausführt. Für diese Fahrzeugsysteme wird entsprechend eine möglichst geringe Ausfallwahrscheinlichkeit angestrebt. Ein Beispiel für ein hochverfügbares bzw. ausfallsicheres Fahrzeugsystem ist ein Bremssystem eines Kraftfahrzeugs. Ein Ausfall eines solchen würde eine Gefahr für Verkehrsteilnehmer bedeuten, weshalb die Funktionsfähigkeit dieses Systems ständig überwacht werden muss, um beim Auftreten eines Fehlers beispielsweise eine Rückfallebene zu aktivieren. Fehlertoleranten Redundanzkonzepte sind in besonderem Maße für Kraftfahrzeugsysteme bedeutsam, welche ausschließlich elektronische Rückfallebenen aufweisen.

Zur Erhöhung der Fehlersicherheit ist es aus der DE 32 34 637 C2 bekannt, zwei Prozessoren mit identischer Software zu betreiben, was auch als symmetrische Redundanz bezeichnet wird. In der DE 41 37 124 A1 ist ein Mikroprozessorsystem mit asymmetrischer Redundanz beschrieben, wobei zwei Prozessoren mit unterschiedlicher Software betrieben werden.

Ein weiteres kernredundantes System ist in der DE 195 29 434 A1 beschrieben, bei dem zwei synchron betriebene Prozessorkerne auf einem oder auf mehreren Chips vorgesehen sind, die die gleichen Eingangsinformationen erhalten und das gleiche Programm abarbeiten. Die beiden Prozessorkerne sind dabei über separate Bus-Systeme an die Festwert- und an die Schreib-Lese-Speicher sowie an Eingabe- und Ausgabeeinheiten angeschlossen. Die Bus-Systeme sind untereinander durch Treiberstufen bzw. Bypässe verbunden, die den beiden Prozessorkernen ein gemeinsames Lesen und Abarbeiten der zur Verfügung stehenden Daten, einschließlich der Prüfdaten und Befehle, ermöglichen. Nur eine der beiden Prozessorkerne ist (direkt) mit einem vollwertigen Festwert- und einem Schreib-Lese-Speicher verbunden, während die Speicherkapazität des zweiten Prozessorkerns auf Speicherplätze für Prüfdaten (Paritätsüberwachung), in Verbindung mit einem Prüfdatengenerator, beschränkt ist. Zugriff zu allen Daten besteht über die Bypässe. Dadurch sind beide Prozessorkerne in der Lage, jeweils das vollständige Programm abzuarbeiten.

In der EP 1 673 667 B1 ist ein kernredundantes Mikrokontroller-System für sicherheitskritische Anwendungen beschrieben, bei welchem digitale Schaltungskomponenten und analoge Schaltungskomponenten zur Ansteuerung von leistungsfähigen Verbrauchern auf einem gemeinsam Chip oder Chipträger untergebracht und durch isolierte Bereiche voreinander geschützt sind.

Die US2008/0258253A1 beschreibt eine Schaltungsanordnung für ein elektronisches Bremssystem, wobei mehrere Funktionsgruppen vorhanden sind, welche auf einem gemeinsamen Chip untergebracht sind. Die Funktionsgruppen sind individuell auf ihre Sicherheit überwachbar und durch isolierte Bereiche voneinander getrennt. Wird ein Fehler festgestellt, kann entweder in einen Sicherheitsmodus geschaltet werden oder eine funktionsfähige Gruppe übernimmt Aufgaben der nicht funktionsfähigen Gruppe.

An sich bekannte Mikrocontroller (MCU) für sicherheitskritische Kraftfahrzeugsysteme sind aus Sicht des Programmiermodells Ein-Kern-Systeme, physikalisch sind häufig jedoch mehrere Prozessorkerne vorhanden, um die Software-Ausführung zu parallelisieren. Ressourcen, wie zum Beispiel Speicher- und/oder Peripherieressourcen, sind allerdings nicht mehrfach ausgeführt und werden von den Prozessorkernen gemeinsam genutzt. Im Gegensatz dazu stellen Multi-Chip Mikrocontroller die vollständigen Ressourcen mehrfach bereit. Als Chip wird im Sinne dieser Beschreibung ein auf einem separaten Halbleitersubstrat untergebrachter integrierter Schaltkreis verstanden.

Ein wesentlicher Nachteil der geteilten Ressourcen von Multi-Kern Mikrocontrollern ist deren Anfälligkeit gegenüber Fehlern, wie z.B. zufälligen Hardware-Fehlern, da immer auch die Kerne betroffen sind, welche diese Ressourcen teilen. Eine Unabhängigkeit der mehrfach vorhandenen Teilsysteme (Kerne) ist somit auch nur für Fehler in diesen gegeben. Die Ausfallwahrscheinlichkeit eines Multi-Kern Mikrocontrollers wird somit wesentlich von Fehlern in den geteilten Ressourcen bestimmt und liegt beispielsweise in der Größenordnung von 40% der Gesamtausfallrate.

Aufgrund dieser Mehrfach-Auslegung sind Multi-Chip Systeme im Vergleich zu Multi-Kern Systemen jedoch hochpreisiger, was insbesondere bei für heutige Verhältnisse großen Programm- und Datenspeichern mit beispielsweise größer als 4 MB Festwertspeicher und größer als 256 kB Arbeitsspeicher der Fall ist. Die Verwendung mehrerer Chips für hochverfügbare Systeme stellt somit eine signifikante Erhöhung der Kosten dar, zu denen insbesondere eine größere Anzahl integrierter Schaltkreise als auch eine erhöhte Komplexität des zugrundeliegenden Schaltungsträgers beiträgt.

Aufgrund der hohen Stückzahlen, mit welchen integrierte Schaltkreise produziert werden, besteht ein enormer Kostendruck auf sämtliche Komponenten. Deren insbesondere auf Sicherheit ausgelegten Funktionalitäten sollen durch kostensenkende Maßnahmen jedoch nicht eingeschränkt werden.

Aufgabe der Erfindung ist es daher, ein Mittel bereitzustellen, welches eine zumindest gleichbleibend hohe Verfügbarkeit von Mikrocontrollersystemen für sicherheitskritische Kraftfahrzeugsysteme ermöglicht und dabei möglichst kostengünstig realisierbar ist.

Diese Aufgabe wird durch ein Mikrocontrollersystemen gemäß Anspruch 1 und ein Verfahren gemäß Anspruch 5 gelöst.

Die Erfindung beschreibt ein Mikrocontrollersystem für sicherheitskritische Kraftfahrzeugsysteme, umfassend mehrere auf einem gemeinsamen Chip angeordnete Subsysteme, von denen wenigstens eines mehrkanalig ausgeführt ist, wobei sich das Mikrocontrollersystem weiterhin dadurch auszeichnet, dass dieses zur Ausführung mehrerer Betriebsmodi ausgestaltet ist, wobei die Subsysteme in einem ersten Betriebsmodus voneinander unabhängig betrieben werden und mittels einer chipinternen Schnittstelle miteinander kommunizieren und in einem zweiten Betriebsmodus wenigstens eines der Subsysteme mittels vorgesehener Datenübertragungsmittel unter Hinzuziehung nichtlokaler Ressourcen wenigstens eines der weiteren Subsysteme betrieben wird und/oder wenigstens eines der Subsysteme in Betrieb und zumindest ein weiteres der Subsysteme inaktiv ist.

In vorteilhafter Weise wird durch das erfindungsgemäße Mikrocontrollersystem sowie das erfindungsgemäße Verfahren eine Reduktion der Anzahl der möglichen Ausgestaltungen von Mikrocontrollersystemen für sicherheitskritische Kraftfahrzeugsysteme und deren Vereinigung auf einem gemeinsamen Chip realisiert, mit welchem weiterhin eine zumindest gleichbleibende Verfügbarkeit umsetzbar ist. Vor dem Hintergrund steigender Kosten für die Maskenfertigung integrierter Schaltkreise moderner Halbleiter-Technologie-knoten - mit derzeitig realisierten minimalen Strukturgrößen von kleiner als 40 nm - stellt dies eine Senkung der einmaligen Entwicklungskosten dar und erhöht die Gesamtstückzahl dieser integrierten Schaltkreises bzw. Mikrocontrollersysteme, da eine Verwendung in unterschiedlichsten Systemen erfolgen kann. Aufgrund dieser Vorteile sind beträchtliche Verringerungen der Herstellungskosten möglich.

Ein Subsystem im Sinne der Erfindung ist bevorzugt ein Mikrocontroller welcher nicht notwendigerweise auf einem separaten Chip untergebracht sein muss, bzw. - mit anderen Worten - ein Computersystem, welches zum Betreiben moderner Kraftfahrzeugsysteme ausgestaltet ist. Ein Subsystem kann neben digitalen bevorzugt auch analoge Schaltungsteile umfassen. Mehrkanalige Systeme weisen in an sich bekannter Weise zumindest zwei getrennte Kanäle auf, wodurch die Fehlererkennung erhöht und die Verfügbarkeit eines zugrundliegenden Systems verbessert wird. Hierbei sind beispielsweise redundante und gegebenenfalls diversitäre Hard- und/oder Softwareauslegung, z.B. mehrere Prozessoren mit unterschiedlich programmierten Algorithmen, bekannt, wobei die jeweiligen Ergebnisse verglichen werden. Dadurch können im Fehlerfall sicherheitskritische Situationen vermieden werden.

Unter inaktiv ist im Sinne der Erfindung bevorzugt ein Betriebszustand zu verstehen, unter welchem ein Subsystem keine eigenständige Programmausführung vornimmt. Dies ist insbesondere ein Ruhezustand oder ein deaktivierter Zustand, bei welchem keine I/O Kommunikation stattfindet. Vorteil-hafterweise können somit Anforderungen hinsichtlich geringerer Energieaufnahme des Mikrocontrollersystems erfüllt werden.

Die Subsysteme weisen erfindungsgemäß unterschiedliche Systemtakt-Domänen auf, wobei bei einer Kommunikation mit den nichtlokalen Ressourcen mittels Synchronisationseinheiten eine Synchronisation von einem zu einem anderen Subsystem erfolgt.

Entsprechend einer bevorzugten Ausführungsform weisen die Subsysteme separate und jeweils diesen zugeordnete Spannungsversorgungen und/oder Systemtakt-Versorgungen auf. Dadurch wird in vorteilhafter Weise die Eigenständigkeit der Subsysteme und Ausfallsicherheit des Mikrocontrollersystems erhöht.

Die hinzugezogenen nichtlokalen Ressourcen sind bevorzugt Speicher- und/oder Peripherieressourcen des wenigstens einen weiteren Subsystems, wobei diese in einen Adressbereich des zumindest einen die nichtlokalen Ressourcen hinzuziehenden Subsystems eingebunden werden. Ein Vorteil davon ist, dass das die nichtlokalen Ressourcen hinzuziehende Subsystem somit in vergleichbarer Weise auf die nichtlokalen Ressourcen zu-greifen kann, wie auf die lokalen Ressourcen und damit ein erweiterter Einsatzbereich, beispielsweise aufgrund kurzzeitiger Anpassung an Auslastungsanforderungen oder dauerhaft, möglich ist.

Die Subsysteme sind entsprechend einer bevorzugten Ausführungsform des Mikrocontrollersystems mittels elektrischer Barrieren voneinander isoliert sind. Somit kann vorteilhafterweise ein elektrisches Übersprechen über den gemeinsamen Chip vermieden werden.

Die Erfindung beschreibt weiterhin ein Verfahren zum Betreiben eines Mikrocontrollersystems für sicherheitskritische Kraftfahrzeugsysteme, wobei das Mikrocontrollersystem mehrere auf einem gemeinsamen Chip angeordnete Subsysteme aufweist und zumindest eines der Subsysteme mehrkanalig betrieben wird, wobei die Subsysteme in einem ersten Betriebsmodus voneinander unabhängig betrieben werden und mittels einer chipinternen Schnittstelle miteinander kommunizieren und in einem zweiten Betriebsmodus wenigstens eines der Subsysteme unter Hinzuziehung nichtlokaler Ressourcen wenigstens eines der weiteren Subsysteme betrieben wird und/oder wenigstens eines der Subsysteme in Betrieb und zumindest ein weiteres der Subsysteme inaktiv ist.

Für das erfindungsgemäße Verfahren ergeben sich im Wesentlichen gleiche Vorteile, wie sie bereits für das erfindungsgemäße Mikrocontrollersystem aufgezeigt wurden.

Entsprechend einer bevorzugten Ausführungsform werden die Subsysteme mittels separater und jeweils diesen zugeordneter Spannungsversorgungen und/oder Systemtakt-Versorgungen betrieben.

Zur Hinzuziehung der nichtlokalen Ressourcen eines der weiteren Subsysteme werden diese in einen Adressbereich des zumindest einen die nichtlokalen Ressourcen hinzuziehenden Subsystems eingebunden.

Bevorzugt werden unterschiedliche Zugriffszeiten auf die nichtlokalen Ressourcen wenigstens eines der weiteren Subsysteme in einer Software-Partitionierung, insbesondere des die nichtlokalen Ressourcen hinzuziehenden Subsystems, berücksichtigt.

Die Erfindung bezieht sich weiterhin auf die Verwendung des erfindungsgemäßen Mikrocontrollersystems und/oder des erfindungsgemäßen Verfahrens in einem sicherheitskritischen Kraftfahrzeugsystem, insbesondere einem Kraftfahrzeugbremssystem.

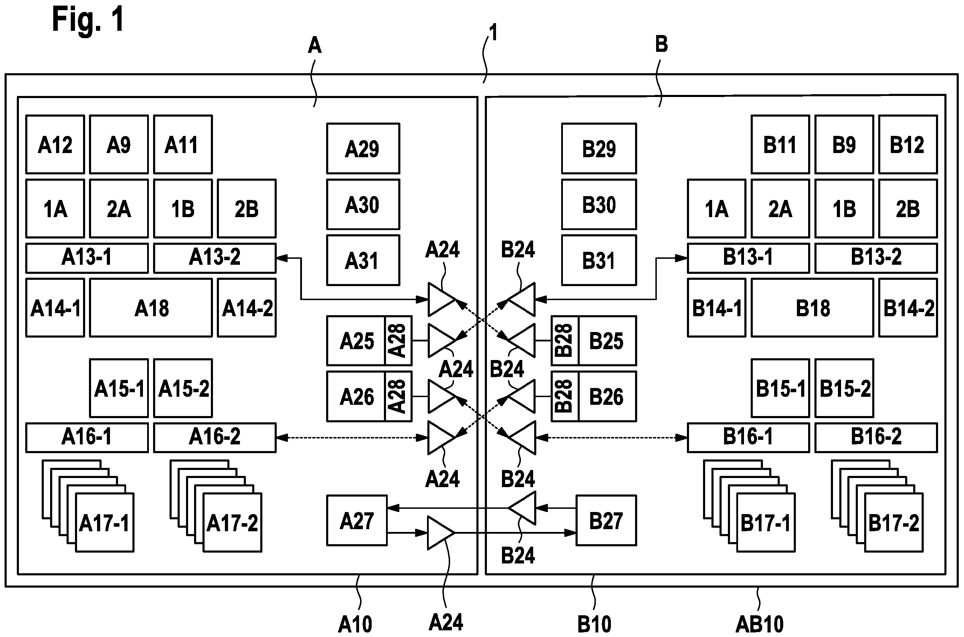

Weitere bevorzugte Ausführungsformen ergeben sich aus der nachfolgenden Beschreibung eines Ausführungsbeispiels an Hand von Figur 1.

In Prinzipdarstellung zeigt:
Fig. 1 eine beispielgemäße Ausführungsform des erfindungsgemäßen Mikrocontrollersystems.

In der Figur 1 und der Beschreibung des Ausführungsbeispiels wird lediglich auf Komponenten eingegangen, welche für das Verständnis der Erfindung wesentlich sind.

Die Fig. 1 zeigt ein Ausführungsbeispiel des erfindungsgemäßen Mikrocontrollersystems, welcher als Kombination aus Multi-Kern und Multi-Chip System auf einem einzigen Chip bzw. Siliziumsubstrat realisiert ist. Dieser umfasst dabei Subsystem A und Subsystem B, welche jeweils als Ein-Kern- oder Multi-Kern-System realisiert sein können und welche - abgesehen von der Kopplung aufgrund des gemeinsamen Silizium-Substrats - physikalisch separiert sind und getrennte Spannungs- A11,B11 und Systemtakt-Versorgungen A12,B12 aufweisen. Zur Verbesserung der funktionalen Sicherheit implementieren beide Subsysteme A und B beispielsgemäß zweikanalige Sicherheitsarchitekturen mit redundanten Kernen 1A,2A und 1B,2B sowie Speicherbussen A13-1, A13-2, B13-1, B13-2, RAM-Speichern A14-1, A14-2, B14-1, B14-2 und Vergleichseinheiten A15-1, A15-2, B15-1, B15-2. Des Weiteren umfasst jedes der Subsysteme A und B wenigstens ein Debug-Modul A9,B9, zumindest einen nichtflüchtigen Speicher A18, B18, Peripherieschnittstellen A17-1,A17-2,B17-1,B17-2 und Peripheriebusse A16-1, A16-2, B16-1, B16-2 zur Anbindung der Peripherieschnittstellen A17-1,A17-2,B17-1,B17-2.

In der physikalischen Implementierung (Platzieren & Routen) werden die Subsysteme A und B so entworfen, als wären sie eigenständige Schaltkreise. Die Subsysteme A und B sind jeweils und zusätzlich gemeinsam von elektrischen Barrieren A10, B10, AB10 umgeben, welche im Vergleich zum umgebenden Substrat insbesondere hochohmig ausgebildet sind und als Isolation gegenüber Störungen, wie beispielsweise Überspannung, elektrostatische Spannungen (ESD) und/oder Überlastung, dienen. In einem der Subsysteme auftretende Störungen werden somit lokal begrenzt und können sich nicht auf das andere Subsystem oder von Störungen von weiteren, nicht dargestellten funktionellen Baugruppen auf dem Chip 1 auf die Subsysteme A, B ausbreiten. Insbesondere im Bereich zwischen den Subsystemen A und B kann anstelle der zwei separaten Barrieren A10, B10 auch lediglich eine Barriere vorgesehen sein. Elektrische Leitungen, welche eine Kommunikation zwischen den Subsystemen A, B realisieren, sind über die Barrieren A10, B10 hinweggeführt, wobei zur Vermeidung von Einschränkungen bezüglich der Sicherheit, welche sich mit diesen Leitungen ergeben können, Puffer A24, B24 und/oder ESD-Schutzstrukturen vorgesehen sind. Signale, welche zur Kommunikation mit anderen Komponenten auf Chip 1 als den Subsystemen dienen, können ebenfalls über derartige chipinterne Treiber geführt werden, wie es beispielsweise für die weiter unten beschriebene chipinterne Schnittstelle A27, B27 und Puffer A24,B24 realisiert ist.

Entsprechend diesem Ausführungsbeispiel sind drei unter-schiedliche Betriebsmodi von Mikrocontrollersystem vorgesehen. Der erste Betriebsmodus realisiert einen Multi-Chip Betrieb, wobei die zwei voneinander unabhängigen Subsysteme A und B aktiviert sind und miteinander über die dedizierte, chipinterne Schnittstelle A27, B27 kommunizieren. Zur Überwachung der Subsysteme A und B, insbesondere in diesem ersten Betriebsmodus, weist jedes der Subsysteme eine Multi-Chip Überwachungseinrichtung A29,B29 ("Watchdog") auf.

Ein Multi-Kern Betrieb unter Verwendung nicht-lokaler Speicher- und Peripherie-Ressourcen liegt gemäß dem zweiten Betriebsmodus vor, wobei ein Subsystem, z.B. A, auf Speicher- A14-1, A14-2, A18, B14-1, B14-2, B18 und/oder Peripherie-Ressourcen A16-1, A16-2, B16-1, B16-2 des anderen Subsystems, z.B. B, zugreift. Der Zugriff erfolgt dabei bevorzugt über die jeweiligen Speicherbusse A13-1, A13-2, B13-1, B13-2 und Peripheriebusse A16-1, A16-2, B16-1, B16-2 des Subsystems B. Insbesondere für Speicherzugriffe können alternativ beispielsweise auch Speicher mit Doppelzugriff vorgesehen sein. Das Subsystem von dem aus Ressourcen bereitgestellt werden (gemäß diesem Ausführungsbeispiel Subsystem B), muss kann dabei selbst Software ausführen - lediglich ohne Verwendung der ausgelagerten Ressourcen - oder inaktiv sein.

Bei einer Störung in einem Subsystem ergibt sich somit keine Rückwirkung auf das andere. Die Speichererweiterungseinheiten A25 und B25 dienen in dem zweiten Betriebsmodus dazu, dem Subsystem A zusätzliche Speicher-Ressourcen des Subsystems B bereitzustellen und somit die lokalen Speicher A14-1,A14-2,A18 des Subsystems A um Teile oder die gesamten Speicherressourcen B14-1,B14-2,B18 von Subsystem B zu erweitern. Aufgrund der größeren physikalischen Leitungslänge zu diesen zusätzlichen Speichermodulen liegt eine langsamere Zugriffszeit im Vergleich mit den lokalen Speichern vor. Dieser Umstand wird in der Software-Partitionierung berücksichtigt (Unterscheidung kleine/große Speicher-Zugriffslatenzzeit).

Die Peripherieerweiterungseinheiten A26 und B26 dienen im zweiten Betriebsmodus dazu, dem Subsystem A zusätzliche Peripherie-Ressourcen des Subsystems B bereitzustellen und somit den Umfang an Peripherieschnittstellen zu erweitern. Aufgrund der größeren physikalischen Leitungslänge zu diesen zusätzlichen Peripherie-Modulen ist die Zugriffszeit, verglichen mit lokal verfügbaren Peripherie-Ressourcen, verlangsamt. Die Peripherieerweiterungseinheiten A26 des Subsystems A binden dabei die jeweiligen Peripherieschnittstellen A17-1,A17-2 in den Adressbereich von Subsystem A ein, sodass diese softwareseitig wie lokale Peripherieschnittstellen betrieben werden können. Der zweite Betriebsmodus umfasst dabei auch den umgekehrten Fall, nämlich dass Subsystem B auf Speicher- und/oder Peripherie-ressourcen von Subsystem A zugreift.

Da die Subsysteme A,B unabhängige Systemtakt-Versorgungseinrichtungen A12,B12 verwenden - auf den Subsystemen A und B also unterschiedliche Systemtakt-Domänen vorliegen - muss insbesondere im zweiten Betriebsmodus eine entsprechende Synchronisation dieser Signale beim Übergang von einem zum anderen Subsystem durchgeführt werden ("Clock Domain Crossing"). Für diesen Zweck sind die Synchronisationseinheiten A28,B28 in den Kommunikationspfaden der Speicher- A25,B25 und Peripherieerweiterungseinheiten A26,B26 vorgesehen.

Der dritte Betriebsmodus repräsentiert einen Multi-Kern Betrieb, bei welchem beispielsgemäß lediglich Subsystem A aktiviert ist und dabei unter Verwendung lokaler - also auf diesem angeordneter - Speicher- und Peripherie-Ressourcen operiert wird. Subsystem B befindet sich entsprechend diesem Modus in einem Ruhezustand bzw. ist deaktiviert.

Weiterhin umfasst jedes Subsystem A, B jeweils eine Einrichtungen A30,B30 zur Überwachung deren Energie- bzw. Spanungsversorgung, wobei im Falle einer Abweichung von einem Sollwert, die größer als ein oder mehrere vorgegebene Grenzwerte ist, das jeweilige Subsystem in einen sicheren Zustand überführt wird. Jedes der Subsysteme A und B umfasst zudem eine Einrichtung A31,B31 zur Überwachung des Systemtakts, wobei im Falle einer Abweichung von einem Referenzwert, welcher größer als ein oder mehrere vorgegebene Grenzwerte sind, das jeweilige Subsystem ebenfalls in einen sicheren Zustand überführt wird.

## Patentansprüche

1. Mikrocontrollersystem für sicherheitskritische Kraftfahrzeugsysteme, umfassend mehrere auf einem gemeinsamen Chip (1) angeordnete Subsysteme (A,B), von denen wenigstens eines mehrkanalig ausgeführt ist, wobei das Mikrocontrollersystem zur Ausführung mehrerer Betriebsmodi ausgestaltet ist, wobei die Subsysteme (A,B)
- in einem ersten Betriebsmodus voneinander unabhängig betrieben werden und mittels einer chipinternen Schnittstelle (A27, B27) miteinander kommunizieren, **dadurch gekennzeichnet, dass**
das Mikrocontrollersystem einen zweiten Betriebsmodus umfasst und die Subsysteme (A,B) im ersten und zweiten Betriebsmodus unterschiedliche Systemtakt-Domänen aufweisen, wobei bei einer Kommunikation mit den nichtlokalen Ressourcen (A13-1, B13-1,..., A18) mittels Synchronisationseinheiten (A28,B28) eine Synchronisation von einem zu einem anderen Subsystem (A,B) erfolgt, wobei
- in dem zweiten Betriebsmodus
a) wenigstens eines der Subsysteme (A,B) mittels vorgesehener Datenübertragungsmittel (A25, B26, A26, B26) unter Hinzuziehung nichtlokaler Ressourcen (A13-1, B13-1, ..., A18) wenigstens eines der weiteren Subsysteme (A,B) betrieben wird oder
b) wenigstens eines der Subsysteme (A,B) in Betrieb und zumindest ein weiteres der Subsysteme (A, B) inaktiv ist oder
c) in dem zweiten Betriebsmodus wenigstens eines der Subsysteme (A,B) mittels vorgesehener Datenübertragungsmittel (A25, B26, A26, B26) unter Hinzuziehung nichtlokaler Ressourcen (A13-1, B13-1, ..., A18) wenigstens eines der weiteren Subsysteme (A,B) betrieben wird und das wenigstens eine Subsystem (A, B) in Betrieb und zumindest das weitere der Subsysteme (A,B) inaktiv ist.

2. Mikrocontrollersystem gemäß Anspruch 1, **dadurch gekennzeichnet, dass** die Subsysteme (A,B) separate und jeweils diesen zugeordnete Spannungsversorgungen (A11,B11) und/oder Systemtakt-Versorgungen (A12,B12) aufweisen.

3. Mikrocontrollersystem gemäß einem der vorhergehenden Ansprüche, **dadurch gekennzeichnet, dass** die hinzugezogenen nichtlokalen Ressourcen (A13-1, B13-1,...,A18) Speicher-und/oder Peripherieressourcen des wenigstens einen weiteren Subsystems (A,B) sind, wobei diese in einen Adressbereich des zumindest einen die nichtlokalen Ressourcen hinzuziehenden Subsystems (A,B) eingebunden werden.

4. Mikrocontrollersystem gemäß einem der vorhergehenden Ansprüche, **dadurch gekennzeichnet, dass** die Subsysteme mittels elektrischer Barrieren (A,10,B10) voneinander isoliert sind.

5. Verfahren zum Betreiben eines Mikrocontrollersystems für sicherheitskritische Kraftfahrzeugsysteme, wobei das Mikrocontrollersystem mehrere auf einem gemeinsamen Chip (1) angeordnete Subsysteme (A,B) aufweist und zumindest eines der Subsysteme (A,B) mehrkanalig betrieben wird, wobei die Subsysteme (A,B)
- in einem ersten Betriebsmodus voneinander unabhängig betrieben werden und mittels einer chipinternen Schnittstelle (A27, B27) miteinander kommunizieren, **dadurch gekennzeichnet, dass**
das Mikrocontrollersystem einen zweiten Betriebsmodus umfasst und die Subsysteme (A,B) im ersten und zweiten Betriebsmodus unterschiedliche Systemtakt-Domänen aufweisen, wobei bei einer Kommunikation mit den nichtlokalen Ressourcen (A13-1, B13-1, ..., A18) mittels Synchronisationseinheiten (A28,B28) eine Synchronisation von einem zu einem anderen Subsystem (A,B) erfolgt, wobei
- in dem zweiten Betriebsmodus
a) wenigstens eines der Subsysteme (A,B) unter Hinzuziehung nichtlokaler Ressourcen (A13-1, B13-1, ..., A18) wenigstens eines der weiteren Subsysteme (A,B) betrieben wird oder
b) wenigstens eines der Subsysteme (A,B) in Betrieb und zumindest ein weiteres der Subsysteme (A, B) inaktiv ist oder
c) in dem zweiten Betriebsmodus wenigstens eines der Subsysteme (A,B) mittels vorgesehener Datenübertragungsmittel (A25, B26, A26, B26) unter Hinzuziehung nichtlokaler Ressourcen (A13-1, B13-1, ..., A18) wenigstens eines der weiteren Subsysteme (A,B) betrieben wird und das wenigstens eine Subsystem (A, B) in Betrieb und zumindest das weitere der Subsysteme (A,B) inaktiv ist.

6. Verfahren gemäß Anspruch 5, **dadurch gekennzeichnet, dass** die Subsysteme (A,B) mittels separater und jeweils diesen zugeordneter Spannungsversorgungen (A11,B11) und/oder Systemtakt-Versorgungen (A12,B12) betrieben werden.

7. Verfahren gemäß einem der vorhergehenden Ansprüche, **dadurch gekennzeichnet, dass** zur Hinzuziehung der nichtlokalen Ressourcen (A13-1, B13-1,...,A18) eines der weiteren Subsysteme (A,B) diese in einen Adressbereich des zumindest einen die nichtlokalen Ressourcen hinzuziehenden Subsystems (A,B) eingebunden werden.

8. Verfahren gemäß einem der vorhergehenden Ansprüche, **dadurch gekennzeichnet, dass** unterschiedliche Zugriffszeiten auf die nichtlokalen Ressourcen (A13-1, B13-1,...,A18) wenigstens eines der weiteren Subsysteme (A,B) in einer Software-Partitionierung berücksichtigt werden.

9. Verwendung des Mikrocontrollersystems gemäß einem der Ansprüche 1 bis 4 und/oder des Verfahrens gemäß einem der Ansprüche 5 bis 8 in einem sicherheitskritischen Kraftfahrzeugsystem, insbesondere einem Kraftfahrzeugbremssystem.

## Claims

1. Microcontroller system for safety-critical motor vehicle systems, comprising a plurality of subsystems (A, B), which are arranged on a common chip (1), at least one of which subsystems (A, B) is of a multi-channel design, wherein the microcontroller system is configured to carry out a plurality of operating modes, wherein the subsystems (A, B)
- in a first operating mode are operated independently of one another and communicate with one another by means of a chip-internal interface (A27, B27),
**characterized in that**
the microcontroller system comprises a second operating mode and the subsystems (A, B) have different system clock domains in the first and second operating mode, wherein during communication with the non-local resources (A13-1, B13-1, ..., A18) one subsystem is synchronized with another (A, B) by means of synchronization units (A28, B28), wherein
- in the second operating mode
a) at least one of the subsystems (A, B) is operated by means of provided data transmission means (A25, B26, A26, B26) additionally using non-local resources (A13-1, B13-1, ..., A18) of at least one of the further subsystems (A, B) or
b) at least one of the subsystems (A, B) is operational and at least a further one of the subsystems (A, B) is inactive or
c) in the second operating mode at least one of the subsystems (A, B) is operated by means of provided data transmission means (A25, B26, A26, B26) additionally using non-local resources (A13-1, B13-1, ..., A18) of at least one of the further subsystems (A, B) and the at least one subsystem (A, B) is operational and at least the further one of the subsystems (A, B) is inactive.

2. Microcontroller system according to Claim 1, **characterized in that** the subsystems (A, B) have separate voltage supplies (A11, B11) and/or system clock supplies (A12, B12) which are respectively assigned thereto.

3. Microcontroller system according to one of the preceding Claims, **characterized in that** the additionally used non-local resources (A13-1, B13-1, ..., A18) are memory resources and/or peripheral resources of the at least one further subsystem (A, B), wherein these resources are integrated into an address region of the at least one subsystem (A, B) which additionally uses the non-local resources.

4. Microcontroller system according to one of the preceding Claims, **characterized in that** the subsystems are isolated from one another by means of electrical barriers (A, 10, B10).

5. Method for operating a microcontroller system for safety-critical motor vehicle systems, wherein the microcontroller system has a plurality of subsystems (A, B) which are arranged on a common chip (1), and at least one of the subsystems (A, B) is operated in a multi-channel fashion, wherein the subsystems (A, B)
- are operated independently of one another in a first operating mode, and communicate with one another by means of a chip-internal interface (A27, B27),
**characterized in that**
the microcontroller system comprises a second operating mode and the subsystems (A, B) have different system clock domains in the first and second operating mode, wherein during communication with the non-local resources (A13-1, B13-1, ..., A18) one subsystem is synchronized with another (A, B) by means of synchronization units (A28, B28), wherein
- in the second operating mode
a) at least one of the subsystems (A, B) is operated additionally using non-local resources (A13-1, B13-1, ..., A18) of at least one of the further subsystems (A, B), or
b) at least one of the subsystems (A, B) is operational and at least a further one of the subsystems (A, B) is inactive or
c) in the second operating mode at least one of the subsystems (A, B) is operated by means of provided data transmission means (A25, B26, A26, B26) additionally using non-local resources (A13-1, B13-1, ..., A18) of at least one of the further subsystems (A, B) and the at least one subsystem (A, B) is operational and at least the further one of the subsystems (A, B) is inactive.

6. Method according to Claim 5, **characterized in that** the subsystems (A, B) are operated by means of separate voltage supplies (A11, B11) and/or system clock supplies (A12, B12) which are respectively assigned thereto.

7. Method according to one of the preceding Claims, **characterized in that**, in order to additionally use the non-local resources (A13-1, B13-1, ..., A18) of one of the further subsystems (A, B), said resources are integrated into an address region of the at least one subsystem (A, B) which additionally uses the non-local resources.

8. Method according to one of the preceding Claims, **characterized in that** different access times to the non-local resources (A13-1, B13-1, ..., A18) of at least one of the further subsystems (A, B) are taken into account in software partitioning.

9. Use of the microcontroller system according to one of Claims 1 to 4 and/or of the method according to one of Claims 5 to 8 in a safety-critical motor vehicle system, in particular a motor vehicle brake system.

## Revendications

1. Système de microcontrôleur pour des systèmes de véhicule à moteur critiques en matière de sécurité, comprenant plusieurs sous-systèmes (A, B) disposés sur une puce commune (1), dont au moins un est conçu de manière multicanal, dans lequel le système de microcontrôleur est conçu pour la mise en oeuvre de plusieurs modes de fonctionnement, dans lequel les sous-systèmes (A, B)
- sont mis en fonctionnement indépendamment les uns des autres dans un premier mode de fonctionnement et communiquent mutuellement au moyen d'une interface (A27, B27) interne à la puce,
**caractérisé en ce que**
le système de microcontrôleur comprend un deuxième mode de fonctionnement et les sous-systèmes (A, B) présentent des domaines d'horloge système différents dans les premier et deuxième modes de fonctionnement, dans lequel, lors d'une communication avec les ressources non locales (A13-1, B13-1, ..., A18), une synchronisation est effectuée au moyen d'unités de synchronisation (A28, B28) d'un sous-système (A, B) par rapport à un autre, dans lequel
- dans le deuxième mode de fonctionnement,
a) au moins l'un des sous-systèmes (A, B) est mis en fonctionnement au moyen de moyens de transmission de données prévus à cet effet (A25, B26, A26, B26) en faisant appel à des ressources non locales (A13-1, B13-1, ..., A18) d'au moins l'un des autres sous-systèmes (A, B), ou
b) au moins l'un des sous-systèmes (A, B) est en fonctionnement et au moins un autre des sous-systèmes (A, B) est inactif ou,
c) dans le deuxième mode de fonctionnement, au moins l'un des sous-systèmes (A, B) est mis en fonctionnement au moyen de moyens de transmission de données (A25, B26, A26, B26) prévus à cet effet en faisant appel à des ressources non locales (A13-1, B13-1, ..., A18) d'au moins l'un des autres sous-systèmes (A, B) et l'au moins un sous-système (A, B) est en fonctionnement et l'au moins un autre des sous-systèmes (A, B) est inactif.

2. Système de microcontrôleur selon la revendication 1, **caractérisé en ce que** les sous-systèmes (A, B) comportent des alimentations en tension (A11, B11) et/ou des alimentations d'horloge système (A12, B12) distinctes et respectivement associées à ceux-ci.

3. Système de microcontrôleur selon l'une des revendications précédentes, **caractérisé en ce que** les ressources non locales (A13-1, B13-1, ..., A18) auxquelles il est fait appel sont des ressources de mémoire et/ou de périphériques de l'au moins un autre sous-système (A, B), dans lequel celles-ci sont mises en oeuvre dans un domaine d'adresse de l'au moins un sous-système (A, B) ne faisant pas appel aux ressources non locales.

4. Système de microcontrôleur selon l'une des revendications précédentes, **caractérisé en ce que** les sous-systèmes sont mutuellement isolés au moyen de barrières électriques (A, 10, B10).

5. Procédé de mise en fonctionnement d'un système de microcontrôleur destiné à des systèmes de véhicules à moteur critiques en matière de sécurité, dans lequel le système de microcontrôleur comporte plusieurs sous-systèmes (A, B) disposés sur une puce commune (1) et au moins l'un des sous-systèmes (A, B) est mis en fonctionnement de manière multicanal, dans lequel les sous-systèmes (A, B)
- sont mis en fonctionnement indépendamment les uns des autres dans un premier mode de fonctionnement et communiquent mutuellement au moyen d'une interface (A27, B27) interne à la puce,
**caractérisé en ce que**
le système de microcontrôleur comprend un deuxième mode de fonctionnement et **en ce que** les sous-systèmes (A, B) présentent des domaines d'horloge système différents dans les premier et deuxième modes de fonctionnement, dans lequel, lors d'une communication avec les ressources non locales (A13-1, B13-1, ..., A18), une synchronisation est effectuée au moyen d'unités de synchronisation (A28, B28) d'un sous-système (A, B) par rapport à un autre, dans lequel
- dans le deuxième mode de fonctionnement,
a) au moins l'un des sous-systèmes (A, B) est mis en fonctionnement en faisant appel à des ressources non locales (A13-1, B13-1, ..., A18) d'au moins l'un des autres sous-systèmes (A, B) ou
b) au moins l'un des sous-systèmes (A, B) est en fonctionnement et au moins un autre des sous-systèmes (A, B) est inactif ou,
c) dans le deuxième mode de fonctionnement, au moins l'un des sous-systèmes (A, B) est mis en fonctionnement au moyen de moyens de transmission de données (A25, B26, A26, B26) prévus à cet effet en faisant appel à des ressources non locales (A13-1, B13-1, ..., A18) d'au moins l'un des autres sous-systèmes (A, B) et l'au moins un sous-système (A, B) est en fonctionnement et l'au moins un autre des sous-systèmes (A, B) est inactif.

6. Procédé selon la revendication 5, **caractérisé en ce que** les sous-systèmes (A, B) sont mis en fonctionnement au moyen d'alimentations en tension (A11, B11) et/ou d'alimentations d'horloge système (A12, B12) distinctes et respectivement associées à ceux-ci.

7. Procédé selon l'une des revendications précédentes, **caractérisé en ce que**, pour faire appel aux ressources non locales (A13-1, B13-1, ..., A18) de l'un des autres sous-systèmes (A, B), ces derniers sont mis en oeuvre dans un domaine d'adresse de l'au moins un des sous-systèmes (A, B) faisant appel aux ressources non locales.

8. Procédé selon l'une des revendications précédentes, **caractérisé en ce que** les différents temps d'accès aux ressources non locales (A13-1, B13-1, ..., A18) d'au moins l'un des autres sous-systèmes (A, B) sont pris en compte dans un partitionnement logiciel.

9. Utilisation du système de microcontrôleur selon l'une des revendications 1 à 4 et/ou du procédé selon l'une des revendications 5 à 8 dans un système de véhicule à moteur critique en matière de sécurité, notamment dans un système de freinage pour véhicule à moteur.
